# EUROPEAN PATENT SPECIFICATION

(11) **EP 3 240 497 B1**
(45) Date of publication and mention of the grant of the patent: **24.06.2020**
(21) Application number: 15875304.6
(22) Date of filing: 22.12.2015
(51) Int. Cl.: A61C 7/08, A61C 7/36

(54) **ORTHODONTIC APPLIANCE**
ORTHODONTISCHE APPARATUR
APPAREIL ORTHODONTIQUE

(30) Priority: 31.12.2014 FI 20140368
(43) Date of publication of application: 08.11.2017
(73) Proprietor: LM-Instruments OY, 21601 Parainen (FI)
(72) Inventor: LEHTONEN, Kari, 21601 Parainen (FI)
(86) International application number: PCT/FI2015/050931
(87) International publication number: WO 2016/107978

(56) References cited:
- US-A- 3 211 143
- US-A- 3 510 946
- US-A- 4 448 735
- US-A- 4 448 735
- US-A- 5 406 962
- US-A- 5 513 984
- US-A1- 2003 224 312
- US-A1- 2013 244 195

## Description

### FIELD OF INVENTION

The present invention concerns orthodontic appliances as defined in the preamble of Claim 1 for guiding the occlusion of an individual.

### BACKGROUND OF INVENTION

Orthodontic appliances typically comprise U-shaped or arch-shaped concaves for teeth of both upper and lower jaw. The upper and lower concaves of the appliance are typically separated by an occlusally extending isthmus, from which the inner and outer walls of the concaves extend vertically. The isthmus may comprise recesses, or blanks, for individual teeth. Typical materials these appliances are made of include thermoplastic elastomers, plasticized (softened) plastics, rubber, and similar elastic materials.

The orthodontic appliances of the prior art include various designs which may include details aimed, for example, to aid in the overall function of the appliance or in curing an individual malocclusion problem.

Due to the properties of elastic materials, the appliances of the prior art do not always work as well as intended, due to the wear and tear of the material. Further, an elastic material does not necessarily always provide optimal properties in view of one or another intended function of the appliance. Thus, e.g. prior art publications US 3,510,964 and WO 2009/026659 teach including structures in an appliance of other than the elastic material the appliance as such is made of US 4,448,735 discloses a tooth positioner comprising several tooth engaging portions formed of materials having different hardness.

### BRIEF DESCRIPTION OF INVENTION

The present invention is defined by the appended independent claim. Preferred embodiments are defined in the appended dependent claims.

The invention according to this application is based on an idea of arranging to the appliance, in the frontal area of the appliance where a person's incisors tend to bite during use of the appliance, a reinforcement element, *i.e.*, a volume comprising harder material than the elastic material the appliance is made of. This makes the appliance more durable in use, especially in cases when the user of the appliance is in a habit of biting on it. Such habit is prone to break the appliance due the user, ultimately, biting through it. The volume of harder material or the reinforcement element is to be arranged inside the isthmus separating the upper and lower concaves of the appliance and such that it will make up a section of a surface of the isthmus.

A structure of an orthodontic appliance according to the invention will make the appliance more durable in use. Further, in case one happens to bite on the appliance, arranging hard material to form a surface of the appliance on which one's incisors will touch is also prone to eliminate such biting, due to discomfort the biting on a hard object causes.

### BRIEF DESCRIPTION OF FIGURES

The invention and its preferable embodiments are described below, also by referring to the attached figures out of which
Fig. 1 shows an orthodontic appliance according to one preferable embodiment of the invention,
Fig. 2 shows a top view of the appliance of Fig. 1,
Fig. 3 shows a side view of a cross section along line A-A of the appliance according to Fig. 2 and
Fig. 4 shows, as an example, an embodiment of a reinforcement element applicable for use in an orthodontic appliance according to the invention.

### DETAILED DESCRIPTION OF INVENTION

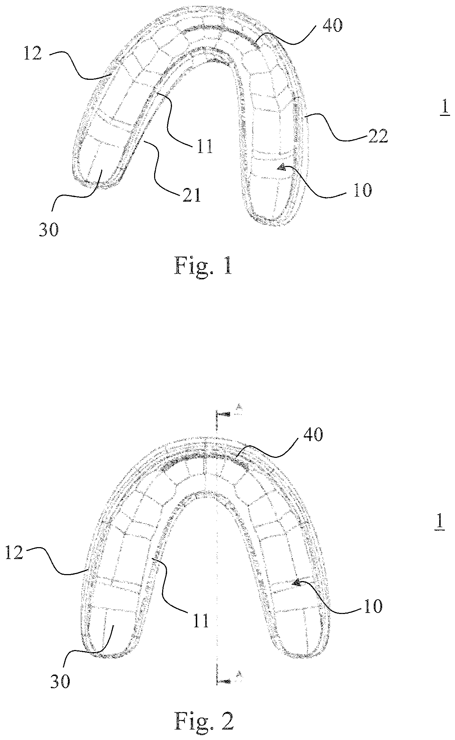

An orthodontic appliance (1) according to Figs. 1-3 includes arch-shaped concaves (10, 20) for teeth of both upper and lower jaw, i.e. an upper concave (10) and a lower concave (20). The upper and lower concaves (10, 20) of the appliance (1) are separated by an occlusally extending isthmus (30), from which the upper and lower inner walls (11, 21) and the upper and lower outer walls (12, 22) of the concaves (10, 20) extend vertically. Inside the isthmus (30), within the area receiving incisors of a user of the appliance (1), is arranged a reinforcement element (40) of material harder than that of which the actual appliance (1) is made.

In the embodiment of Figs. 1-3, the reinforcement element (40) is arranged to extend inside the isthmus (30) of the appliance (1) vertically so as to form sections on the surface of the isthmus (30) for individual incisors. It is possible to arrange the reinforcement element (40) to extend to the surface on just either of the upper and lower sides of the isthmus (30), or to both.

In Figs. 1-2, the reinforcement element (40) is arranged to cover the very areas of the isthmus (30) which will meet the four upper incisors of a person. Benefits of the invention may also be reached, though, in case the reinforcement element (40) is arranged to cover a lesser number of such areas or in case such areas are arranged to be narrower than the area an individual incisor will meet. Further, while in Figs. 1-2 the reinforcement element (40) is arranged to cover the very areas of the isthmus (30) which will meet the incisors of a person, it is also possible to arrange the reinforcement element (40) to form a wider surface which will cover an area of more than one incisor, even to cover the area of all the incisors.

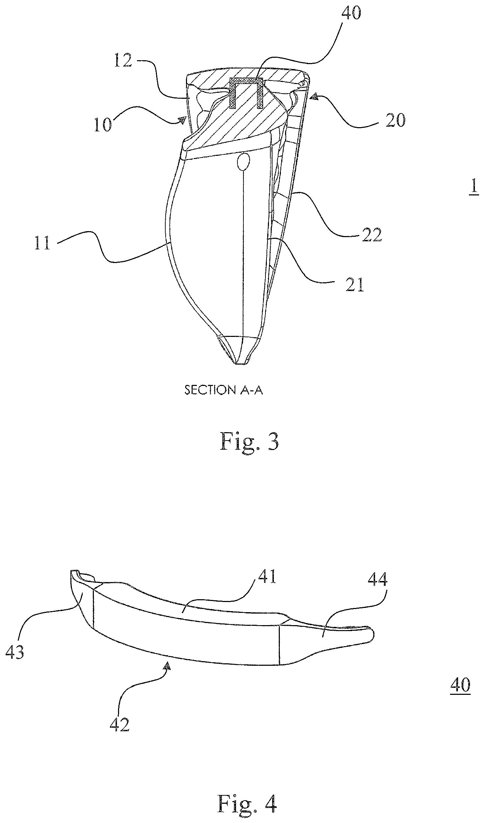

An example of a reinforcement element (40) according to the invention is shown in Fig. 4. In this embodiment, a curvilinear reinforcement element (40) includes an even biting surface (41, 42) on both its upper and lower sides. The reinforcement element (40) further includes curvilinear extension structures (43, 44), which as for their overall shape follow the local shape of the arch shaped concaves (10, 20), extending from the outermost edges of the reinforcement element (40). These extension structures (43, 43) serve, when the reinforcement element (40) is arranged inside the appliance (1) of thermoplastic material, in making the appliance (1) less prone to break during use because of creating a larger contact surface between the reinforcement element (40) and the actual appliance (1). In addition, the extension structures (43, 44) serve as stiffening elements making the appliance (1) more rigid and thus helping in maintaining its original arch form, when an outer force acts upon it.

It is possible to design the reinforcement element (40) different as for its upper and lower surfaces (41, 42). For example, the upper surface (41) may be arranged to cover the whole area from the upper outermost incisor to another upper outermost incisor while the lower surface (42) may be arranged to create four individual surface areas, separated from each other, for all the four lower incisors.

The surface areas of the isthmus (30) of the appliance (1) which are to be of harder material may also be formed by using more than one reinforcement element (40).

In the reinforcement element (40) of Fig. 4, the front and back surfaces of the reinforcement element (40) are presented as smooth. While these surfaces of the reinforcement element (40) need not to be arranged to extend to any labial or lingual surface of the appliance, forms such as through holes or pot holes, ribs etc. can be arranged to the reinforcement element (40), which can help in manufacture of an appliance according to the invention and, also for their part, in making the appliance less prone to break during use.

Hence, a reinforcement element (40) according to the invention may be arranged to include one or more pin recesses for attaching the reinforcement element temporarily onto pins associated with the manufacturing process, such as injection moulding manufacturing process or liquid silicone rubber manufacturing process. The pin of an injection moulding machine or of a mould may be e.g. cylindrical or rectangular and the pin recess correspondingly shaped, essentially as the inverse of the pin. The recess may be slightly narrower than the pin in order to provide slight tension that holds the reinforcement element (40) in place on the pin during the injection moulding process.

Benefits of using these pin recesses include that they enable accurate positioning of the reinforcement element (40) within the orthodontic appliance (1) during the manufacturing process, simplify the manufacturing process, improve time and cost efficiency, and increase process reliability by reducing its complexity.

A further benefit of such recesses is that they may be arranged to form breathing holes for a person wearing the appliance.

According to one embodiment of the invention, the volume or the reinforcement element (40) of harder material is arranged to cover areas of the isthmus (30) which will meet the four upper and lower incisors as well as the canines of a person.

According to another embodiment of the invention, the volume or the reinforcement element (40) of harder material is arranged to cover only those areas of the isthmus (30) which will meet the two upper and lower central incisors of a person.

According to yet another embodiment of the invention, the volume or the reinforcement element (40) of harder material is arranged to cover different areas of the isthmus (30) on the upper and lower surface, for example so that the upper surface meets the four upper incisor and the lower surface meets two lower central incisor.

To sum up, the orthodontic appliance according to the invention is made of elastic material and comprises arch-shaped upper and lower concaves for teeth of upper and lower jaw, which concaves are separated by an occlusally extending arch-shaped isthmus and comprise inner and outer walls extending vertically from the edges of the isthmus. The appliance includes a volume or a reinforcement element within the frontal section of the arch-shaped isthmus of material harder than said elastic material and extending vertically in the isthmus so as to form at least one section of a surface of the isthmus, so as to make up a biting surface on the isthmus, particularly, on both the upper and lower side of the isthmus.

As an example, the volume or the reinforcement element of material harder than the elastic material may be arranged to form sections of the surface of the isthmus of different lengths on the upper and lower sides of the isthmus, such as to form at least one section which will meet at least one incisor of a person using the appliance on at least either of the upper side and the lower side of the isthmus. At least one of said at least one section meeting at least one incisor may be made wider than the width of an individual incisor, or at least twice as wide as the width of an individual incisor. The volume or the reinforcement element of material harder than said elastic material may also be arranged to form a single section which meets all incisors of a person using the appliance on at least either of the upper side and the lower side of the isthmus. The volume or the reinforcement element of material harder than said elastic material may extend from an outermost edge of a first outermost incisor to an outermost edge of a second outermost incisor, or from an outermost edge of a first canine to an outermost edge of a second canine, on at least either of the upper side and the lower side of the isthmus.

According to one embodiment, more than one volume or reinforcement element of material harder than the elastic material is arranged in the isthmus so as to form, in combination, subsections of the at least one section of the surface of the isthmus on at least either of the upper and lower sides of the isthmus of material harder than said elastic material.

Preferably, the at least one volume or reinforcement element of material harder than the elastic material is arranged, as for its shape, to follow the shape of the arch-shaped concaves.

According to one embodiment, the at least one volume or reinforcement element of material harder than the elastic material comprises of a single reinforcement element having a width essentially corresponding to the total width of the upper incisors of a person.

According to one embodiment, extension structures are arranged at the ends of a single reinforcement element having a width essentially corresponding to the total width of the upper incisors of a person using the appliance. Such extension structures as for their overall shape may follow the shape of the arch-shaped concaves of the appliance.

Further, the at least one reinforcement element of material harder than said elastic material may be arranged with at least one pin recess for temporary attachment of the reinforcement element to at least one pin of a moulding machinery or a mould during manufacture of the appliance.

While incisors tend to cause more mechanical stress on an orthodontic appliance than posterior teeth, the appliance according to the invention provides a tactile stimuli specifically to the incisors and also provides a more durable surface in the region of the incisors of the appliance.

Further, while an orthodontic appliance with a generally uniform elasticity throughout the surface of the appliance tends to stimulate biting the appliance or playing with it in a manner similar to chewing on a chewing gum, the increased stimuli provided by the reinforcement element according to the invention actually tends to modulate the biting force applied on the appliance to a more moderate level. Thus, considering behavioural psychology, the orthodontic appliance incorporating a reinforcement element according to the invention, providing tactile stimuli of greater magnitude to the incisors of the patient than to the posterior teeth, provides an antecedent stimulus for a reinforcing behaviour to press the teeth onto the appliance with a more suitable force, discourages chewing and playing with the appliance, and prevents excessive biting on the appliance.

Above, various details of an appliance according to invention have been discussed which details may vary, depending on the embodiment of the invention. Combinations of those details, also other combinations than those literally discussed above, may be arranged in the appliance without separating from the scope of invention.

## Claims

1. An orthodontic appliance made of elastic material and comprising arch-shaped upper and lower concaves (10, 20) for teeth of upper and lower jaw, the concaves (10, 20) being separated by an occlusally extending arch-shaped isthmus (30) and comprising inner (11, 21) and outer walls (12, 22) extending vertically from the edges of the isthmus (30), said isthmus (30) being configured to include at least one biting surface (41, 42) of material harder than said elastic material, **characterized in that** the appliance includes inside the frontal section of the arch-shaped isthmus (30) a volume in form of a reinforcement element (40) of material harder than said elastic material, said volume extending vertically in the isthmus (30) so as to form at least one biting surface (41, 42) of material harder than said elastic material on both the upper and lower side of the isthmus (30).

2. The orthodontic appliance according to claim 1, **characterized in that** said reinforcement element (40) of material harder than said elastic material is arranged to form sections of the surface of the isthmus (30) of different lengths on the upper and lower sides of the isthmus (30).

3. The orthodontic appliance according to claim 1 or 2, **characterized in that** said reinforcement element (40) of material harder than said elastic material is arranged to form at least one section which will meet at least one incisor of a person using the appliance (1) on at least either of the upper side and the lower side of the isthmus (30).

4. The orthodontic appliance according to claim 3, **characterized in that** at least one of said at least one section meeting at least one incisor is wider than a width of an individual incisor.

5. The orthodontic appliance according to claim 4, **characterized in that** at least one of said at least one section meeting at least one incisor is at least twice as wide as the width of an individual incisor.

6. The orthodontic appliance according to any of the claims to 1 to 5, **characterized in that** said reinforcement element (40) of material harder than said elastic material is arranged to form a single section which meets all incisors of a person using the appliance on at least either of the upper side and the lower side of the isthmus (30).

7. The orthodontic appliance according to claim 6, **characterized in that** said reinforcement element (40) of material harder than said elastic material is arranged to extend from an outermost edge of a first outermost incisor to an outermost edge of a second outermost incisor, or from an outermost edge of a first canine to an outermost edge of a second canine, on at least either of the upper side and the lower side of the isthmus (30).

8. The orthodontic appliance according to any of the claims 1 to 7, **characterized in that** more than one reinforcement element (40) of material harder than said elastic material is arranged in the isthmus (30) so as to form, in combination, subsections of said at least one section of the surface of the isthmus (30) on at least either of the upper and lower sides of the isthmus (30).

9. The orthodontic appliance according to any of the claims 1 to 8, **characterized in that** at least one reinforcement element (40) of material harder than said elastic material is arranged as for its shape to follow the shape of the arch-shaped concaves (10, 20).

10. The orthodontic appliance according to claim 9, **characterized in that** said at least one reinforcement element (40) of material harder than said elastic material comprises of a single reinforcement element (40) having a width essentially corresponding to the total width of the upper incisors of a person.

11. The orthodontic appliance according to claim 10, **characterized in that** extension structures (43, 44) are arranged at the ends of said single reinforcement element (40) having a width essentially corresponding to the total width of the upper incisors of a person, which extension structures (43, 44) as for their overall shape follow the shape of the arch-shaped concaves (10, 20) of the appliance.

12. The orthodontic appliance according to any of the claims 2 to 11, **characterized in that** said at least one reinforcement element (40) of material harder than said elastic material includes at least one pin recess for temporary attachment of the reinforcement element (40) to at least one pin of a moulding machinery or a mould during manufacture of the appliance.

## Patentansprüche

1. Kieferorthopädische Vorrichtung aus elastischem Material mit bogenförmigen oberen und unteren Konkaven (10, 20) für die Zähne des Ober- und Unterkiefers, wobei die Konkaven (10, 20) durch einen sich okklusal erstreckenden bogenförmigen Isthmus (30) getrennt sind und innere (11, 21) und äußere Wände (12, 22) umfassen, die sich vertikal von den Rändern des Isthmus (30) erstrecken, wobei der Isthmus (30) so konfiguriert ist, dass er mindestens eine Beißfläche (41, 42) aus einem Material, das härter als das elastische Material ist, einschließt, **dadurch gekennzeichnet, dass** die Vorrichtung innerhalb des frontseitigen Abschnitts des bogenförmigen Isthmus (30) ein Volumen in Form eines Verstärkungselements (40) aus einem Material, das härter als das elastische Material ist, einschließt, wobei sich das Volumen in dem Isthmus (30) vertikal erstreckt, um sowohl auf der Oberseite als auch auf der Unterseite des Isthmus (30) mindestens eine Beißfläche (41, 42) aus einem Material, das härter als das elastische Material ist, zu bilden.

2. Kieferorthopädische Vorrichtung nach Anspruch 1, **dadurch gekennzeichnet, dass** das Verstärkungselement (40) aus einem Material, das härter als das elastische Material ist, so angeordnet ist, dass es auf der Oberseite und der Unterseite des Isthmus (30) Abschnitte der Oberfläche des Isthmus (30) mit unterschiedlichen Längen bildet.

3. Kieferorthopädische Vorrichtung nach Anspruch 1 oder 2, **dadurch gekennzeichnet, dass** das Verstärkungselement (40) aus einem Material, das härter als das elastische Material ist, so angeordnet ist, dass es auf mindestens einer von der Oberseite und der Unterseite des Isthmus (30) mindestens einen Abschnitt bildet, der auf mindestens einen Schneidezahn einer Person, die die Vorrichtung (1) verwendet, treffen wird.

4. Kieferorthopädische Vorrichtung nach Anspruch 3, **dadurch gekennzeichnet, dass** mindestens einer des mindestens einen Abschnitts, der auf mindestens einen Schneidezahn trifft, breiter als eine Breite eines einzelnen Schneidezahns ist.

5. Kieferorthopädische Vorrichtung nach Anspruch 4, **dadurch gekennzeichnet, dass** mindestens einer des mindestens einen Abschnitts, der auf mindestens einen Schneidezahn trifft, mindestens doppelt so breit ist wie die Breite eines einzelnen Schneidezahns.

6. Kieferorthopädische Vorrichtung nach einem der Ansprüche 1 bis 5, **dadurch gekennzeichnet, dass** das Verstärkungselement (40) aus einem Material, das härter als das elastische Material ist, so angeordnet ist, dass es auf mindestens einer von der Oberseite und der Unterseite des Isthmus (30) einen einzelnen Abschnitt bildet, der auf alle Schneidezähne einer Person trifft, die die Vorrichtung verwendet.

7. Kieferorthopädische Vorrichtung nach Anspruch 6, **dadurch gekennzeichnet, dass** das Verstärkungselement (40) aus einem Material, das härter als das elastische Material ist, so angeordnet ist, dass es sich auf mindestens einer von der Oberseite und der Unterseite des Isthmus (30) von einem äußersten Rand eines ersten äußersten Schneidezahns zu einem äußersten Rand eines zweiten äußersten Schneidezahns oder von einem äußersten Rand eines ersten Eckzahns zu einem äußersten Rand eines zweiten Eckzahns erstreckt.

8. Kieferorthopädische Vorrichtung nach einem der Ansprüche 1 bis 7, **dadurch gekennzeichnet, dass** mehr als ein Verstärkungselement (40) aus einem Material, das härter als das elastische Material ist, in dem Isthmus (30) so angeordnet ist, dass es auf mindestens einer von der Oberseite und der Unterseite des Isthmus (30) in Kombination Unterabschnitte des mindestens einen Abschnitts der Oberfläche des Isthmus (30) bildet.

9. Kieferorthopädische Vorrichtung nach einem der Ansprüche 1 bis 8, **dadurch gekennzeichnet, dass** mindestens ein Verstärkungselement (40) aus einem Material, das härter als das elastische Material ist, so angeordnet ist, dass seine Form der Form der bogenförmigen Konkaven (10, 20) folgt.

10. Kieferorthopädische Vorrichtung nach Anspruch 9, **dadurch gekennzeichnet, dass** das mindestens eine Verstärkungselement (40) aus einem Material, das härter als das elastische Material ist, aus einem einzelnen Verstärkungselement (40) besteht, dessen Breite im Wesentlichen der Gesamtbreite der oberen Schneidezähne einer Person entspricht.

11. Kieferorthopädische Vorrichtung nach Anspruch 10, **dadurch gekennzeichnet, dass** an den Enden des einzelnen Verstärkungselements (40), dessen Breite im Wesentlichen der Gesamtbreite der oberen Schneidezähne einer Person entspricht, Verlängerungsstrukturen (43, 44) angeordnet sind, wobei die Verlängerungsstrukturen (43, 44) hinsichtlich ihrer Gesamtform der Form der bogenförmigen Konkaven (10, 20) der Vorrichtung folgen.

12. Kieferorthopädische Vorrichtung nach einem der Ansprüche 2 bis 11, **dadurch gekennzeichnet, dass** das mindestens eine Verstärkungselement (40) aus einem Material, das härter als das elastische Material ist, mindestens eine Stiftaussparung aufweist zur vorübergehenden Befestigung des Verstärkungselements (40) an mindestens einen Stift einer Formmaschine oder einer Form während der Herstellung der Vorrichtung.

## Revendications

1. Appareil orthodontique en matériau élastique et comprenant des parties concaves supérieure et inférieure de forme arquée (10, 20) pour les dents des mâchoires supérieure et inférieure, les parties concaves (10, 20) étant séparées par un isthme de forme arquée s'étendant de manière occlusive (30) et comprenant des parois intérieure (11, 21) et extérieure (12, 22) s'étendant verticalement à partir des bords de l'isthme (30), ledit isthme (30) étant configuré pour inclure au moins une surface de morsure (41, 42) de matériau plus dur que ledit matériau élastique, **caractérisé en ce que** l'appareil inclut à l'intérieur de la section frontale de l'isthme de forme arquée (30) un volume sous forme d'un élément de renforcement (40) en matériau plus dur que ledit matériau élastique, ledit volume s'étendant verticalement dans l'isthme (30) de manière à former au moins une surface de morsure (41, 42) de matériau plus dur que ledit matériau élastique sur les côtés supérieur et inférieur de l'isthme (30).

2. Appareil orthodontique selon la revendication 1, **caractérisé en ce que** ledit élément de renforcement (40) en matériau plus dur que ledit matériau élastique est agencé pour former des sections de la surface de l'isthme (30) de longueurs différentes sur les côtés supérieur et inférieur de l'isthme (30).

3. Appareil orthodontique selon la revendication 1 ou 2, **caractérisé en ce que** ledit élément de renforcement (40) en matériau plus dur que ledit matériau élastique est agencé pour former au moins une section qui rencontrera au moins une incisive d'une personne utilisant l'appareil (1) sur au moins l'un des côtés supérieur et inférieur de l'isthme (30).

4. Appareil orthodontique selon la revendication 3, **caractérisé en ce qu'**au moins une desdites au moins une section rencontrant au moins une incisive est plus large qu'une largeur d'une incisive individuelle.

5. Appareil orthodontique selon la revendication 4, **caractérisé en ce qu'**au moins une desdits au moins une section rencontrant au moins une incisive est au moins deux fois aussi large que la largeur d'une incisive individuelle.

6. Appareil orthodontique selon l'une quelconque des revendications 1 à 5, **caractérisé en ce que** ledit élément de renforcement (40) en matériau plus dur que ledit matériau élastique est agencé pour former une section unique qui rencontre toutes les incisives d'une personne utilisant l'appareil sur au moins l'un des côtés supérieur et inférieur de l'isthme (30).

7. Appareil orthodontique selon la revendication 6, **caractérisé en ce que** ledit élément de renforcement (40) en matériau plus dur que ledit matériau élastique est agencé pour s'étendre d'un bord le plus à l'extérieur d'une première incisive la plus à l'extérieur à un bord le plus à l'extérieur d'une seconde incisive la plus à l'extérieur, ou d'un bord le plus extérieur d'une première canine à un bord le plus à l'extérieur d'une seconde canine, sur au moins l'un des côtés supérieur et inférieur de l'isthme (30).

8. Appareil orthodontique selon l'une quelconque des revendications 1 à 7, **caractérisé en ce que** plus d'un élément de renforcement (40) en matériau plus dur que ledit matériau élastique est agencé dans l'isthme (30) de manière à former, en combinaison, des sous-sections de ladite au moins une section de la surface de l'isthme (30) sur au moins l'un des côtés supérieur et inférieur de l'isthme (30).

9. Appareil orthodontique selon l'une quelconque des revendications 1 à 8, **caractérisé en ce qu'**au moins un élément de renforcement (40) en matériau plus dur que ledit matériau élastique est agencé quant à sa forme pour épouser la forme des parties concaves de forme arquée (10, 20).

10. Appareil orthodontique selon la revendication 9, **caractérisé en ce que** ledit au moins un élément de renforcement (40) en matériau plus dur que ledit matériau élastique comprend un élément de renforcement unique (40) ayant une largeur correspondant essentiellement à la largeur totale des incisives supérieures d'une personne.

11. Appareil orthodontique selon la revendication 10, **caractérisé en ce que** des structures d'extension (43, 44) sont agencées aux extrémités dudit élément de renforcement unique (40) ayant une largeur correspondant essentiellement à la largeur totale des incisives supérieures d'une personne, lesquelles structures d'extension (43, 44) quant à leur forme globale épousent la forme des parties concaves de forme arquée (10, 20) de l'appareil.

12. Appareil orthodontique selon l'une quelconque des revendications 2 à 11, **caractérisé en ce que** ledit au moins un élément de renforcement (40) en matériau plus dur que ledit matériau élastique inclut au moins un évidement de broche pour une fixation temporaire de l'élément de renforcement (40) à au moins une broche d'une machine de moulage ou d'un moule lors de la fabrication de l'appareil.
